# EUROPÄISCHE PATENTSCHRIFT

(11) **EP 1 683 967 B1**
(45) Veröffentlichungstag und Bekanntmachung des Hinweises auf die Patenterteilung: **21.11.2007**
(21) Anmeldenummer: 04030995.7
(22) Anmeldetag: 30.12.2004
(51) Int. Cl.: F04B 23/02, B01F 5/00, F01N 3/10, B01D 53/94

(54) **Vorrichtung zur Erzeugung eines Reduktionsmittel-Luft-Gemisches**
Device for producing a mixture of reduding agent and air
Dispositif de production d'un melange reducteur-air

(43) Veröffentlichungstag der Anmeldung: 26.07.2006
(73) Patentinhaber: Grundfos NoNox a/s, 8850 Bjerringbro (DK)
(72) Erfinder: Hans Henrik Jochumsen, 3450 Allerød (DK); Niels Frederiksen, 2720 Vanløse (DK); Karim Lindberg, 3670 Veksø (DK); Niels Torp Madsen, 3460 Birkerød (DK); Tom Johansen, 25443 Helsingborg (SE)
(74) Vertreter: Hemmer, Arnd

(56) Entgegenhaltungen:
- EP-A- 1 435 458
- DE-A1- 10 047 512
- DE-A1- 10 048 246
- DE-A1- 19 750 138
- DE-A1- 19 946 902

## Beschreibung

Die Erfindung betrifft ein Dosierpumpenaggregat zum Zumischen eines flüssigen Reduktionsmittels in einem Abgasstrom.

Bei selbstzündenden Brennkraftmaschinen entstehen beim Betrieb mit Sauerstoffüberschuss, was in der Vielzahl der Betriebszustände der Fall ist, Stickoxyde, und zwar insbesondere bei Direkteinspritzung in den Hauptbrennraum, wie dies typischerweise bei Dieselmotoren der Fall ist. Um diese Stickoxyd-Emmissionen zu verringern, ist es bekannt, den Abgasstrom einen Reduktionskatalysator zuzuführen. Als Reduktionsmittel wird dabei üblicherweise eine wässrige Harnstofflösung dem Abgas vor Eintritt in den Katalysator fein verteilt zugeführt. Dabei ist die zugeführte Harnstoffmenge möglichst exakt auf den Verbrennungsprozess abzustimmen, um eine möglichst vollständige Reduktion innerhalb des Katalysators zu gewährleisten und andererseits ein Harnstoffüberschuss zu vermeiden.

Aus DE 100 48 246 A1 ist eine Vorrichtung zur Erzeugung eines Reduktionsmittel-Luft-Gemisches bekannt. Diese Vorrichtung weist eine Membranpumpe auf, welche das Reduktionsmittel dosiert zu einem Mischbereich fördert, in welchem es mit Druckluft gemischt wird. Sowohl in der Druckluftzufuhr zu dem Mischbereich als auch in der Reduktionsmittelzufuhr ist jeweils ein Rückschlagventil angeordnet. Das Rückschlagventil für die Reduktionsmittelzufuhr ist im Inneren einer elastischen Hülse angeordnet, über deren Außenumfang die Druckluft dem Mischbereich zugeführt wird. Diese Anordnung hat den Nachteil, dass es im Inneren der Hülse zu einer Kristallisation von Reduktionsmitteln kommen kann, welche die Funktion der Vorrichtung beeinträchtigen kann.

Aus DE 199 46 902 A1 ist eine weitere Vorrichtung zum Nachbehandeln von Abgasen mit einem Reduktionsmittel bekannt. Auch hier wird das Reduktionsmittel in einem Mischbereich mit Druckluft gemischt. Dabei mündet die Reduktionsmittelleitung direkt in den Mischraum und wird von der zugeführten Druckluft umströmt. Bei dieser Anordnung besteht die Gefahr, dass Druckluft in die Reduktionsmittelleitung eindringt und dort Reduktionsmittel kristallisiert, was den Betrieb der Vorrichtung beeinträchtigen würde.

Zur Dosierung und Zuführung des Reduktionsmittels zu dem Abgasstrom ist aus EP 1 435 458 A1 ein spezielles Dosierpumpenaggregat bekannt. Bei diesem Dosierpumpenaggregat wird das zugeführte Reduktionsmittel im Dosierpumpenaggregat vor der Zuführung zu dem Abgasstrom mit Druckluft gemischt bzw. beaufschlagt. Da Harnstoff in Verbindung mit Luft zur Kristallisation neigt, ist es wichtig, den gesamten Bereich, in den Luft und Harnstoff gelangen, vor Außerbetriebnahme der Anlage mit Luft durchzuspülen, so dass in diesem Bereich kein Harnstoff verbleibt. Dazu ist in dem Dosierpumpenaggregat gemäß EP 1 435 458 A1 ein 3/2-Wegeventil vorgesehen, welches in einer ersten Stellung Harnstoff in einen Leitungsabschnitt leitet, welcher mit einer Druckluftleitung zur Druckluftbeaufschlagung des Harnstoffes verbunden ist. In einer zweiten Stellung ist das 3/2 Wegeventil so geschaltet, dass kein Harnstoff in den genannten Leitungsabschnitt gelangt sondern über einen zweiten Eingang des 3/2 Wegeventils Druckluft zugeführt wird, so dass der Leitungsabschnitt, in welchem der Harnstoff mit Druckluft beaufschlagt wird mit Druckluft ausgespült wird. Auf diese Weise kann eine Kristallisation des Harnstoffes in dem Leitungsabschnitt verhindert werden.

Der Aufbau des Dosierpumpenaggregates gemäß EP 1 435 458 A1 ist aufgrund des für die Spülung erforderlichen Ventils recht aufwändig. Ferner verkompliziert sich der Betrieb des Dosierpumpenaggregates, da jedes Mal beim Ausschalten das Spülen der mit Luft und Harnstoff in Kontakt kommenden Anlagenteil sichergestellt werden muss. Allerdings ist es aus Kostengründen und aus Gründen der Betriebssicherheit wünschenswert, den Aufbau und Betrieb des Dosierpumpenaggregats zu vereinfachen.

Es ist daher Aufgabe der Erfindung, ein verbessertes Dosierpumpenaggregat zum Zumischen eines flüssigen Reduktionsmittels in einen Abgasstrom zu schaffen, welches einfacher und kostengünstiger aufgebaut ist und einen zuverlässigen Betrieb ermöglicht.

Diese Aufgabe wird durch ein Dosierpumpenaggregat mit den im Anspruch 1 angegebenen Merkmalen gelöst. Bevorzugte Ausführungsformen ergeben sich aus den zugehörigen Unteransprüchen, der nachfolgenden Beschreibung sowie den Figuren.

Das erfindungsgemäße Dosierpumpenaggregat welches zum Zumischen eines flüssigen Reduktionsmittels (z. B. Harnstoff) in einen Abgasstrom vorgesehen ist, weist eine Vormischeinrichtung auf, in welcher in einem Mischbereich das zugeführte, von einer Dosierpumpe geförderte Reduktionsmittel mit einem Druckgas gemischt wird. Die Dosierpumpe fördert das Reduktionsmittel aus einem Tank, wobei die Dosierpumpe eine steuerbare an den momentanen Verbrennungsprozess im Motor angepasste Reduktionsmittelmenge fördert. Zum Beispiel kann die Dosierpumpe als Membran- oder Kolbenpumpe ausgebildet sein, wobei durch die Zahl der Pumphübe und/oder der Hubgeschwindigkeit die geförderte Reduktionsmittelmenge eingestellt werden kann. Die Vormischvorrichtung ist so ausgebildet, dass in einer Zuführung für das Reduktionsmittel in Strömungsrichtung vor dem eigentlichen Mischbereich ein erstes Rückschlagventil angeordnet ist. Dieses Rückschlagventil verhindert, dass Druckgas und insbesondere Druckluft in die Druckleitung, über welche das Reduktionsmittel zu dem Mischbereich gefördert wird, eindringen kann. Es wird somit sichergestellt, dass die Reduktionsmittelleitung, welche in Strömungsrichtung vor dem Mischbereich liegt frei von Druckgas bzw. Druckluft gehalten wird, so dass in diesem Bereich eine. Kristallisation des Reduktionsmittels, insbesondere Harnstoff, sicher verhindert werden kann. Das Reduktionsmittel kommt nur in Strömungsrichtung hinter dem Rückschlagventil, d. h. in dem Mischbereich und von diesem weiter strömungsabwärts zu einer Einspritzdüse zum Einspritzen des Druckgas/Reduktionsmittels-Gemisches in den Abgasstrom mit dem Druckgas in Kontakt. Da dem Mischbereich ohnehin Druckgas zugeführt wird, wird dieser Bereich, in dem das Reduktionsmittel mit Druckgas in Kontakt kommen kann beim Abschalten der Zufuhr des Reduktionsmittels immer automatisch von dem Druckgas durchgespült, so dass in diesem Bereich keine Reste des Reduktionsmittels, welche kristallisieren könnten, verbleiben können.

Die erfindungsgemäße Anordnung des Rückschlagventils in der Reduktionsmittelleitung vor dem Mischbereich macht somit den zusätzlichen Spülvorgang beim Ausschalten des Dosierpumpenaggregates überflüssig. Ferner sind keine zusätzlichen Ventile in dem Dosierpumpenaggregat erforderlich, um einen solchen Spülvorgang einzuleiten. Somit wird sowohl der Aufbau als auch der Betrieb des Dosierpumpenaggregates erheblich vereinfacht und eine größere Betriebssicherheit erreicht.

Unter Mischen von Druckgas und Reduktionsmittel in im Sinne dieser Erfindung ist nicht nur ein homogenes Mischen zu verstehen, bei welchem das Reduktionsmittel in dem Druckgas fein verteilt wird. Vielmehr kann die Mischung auch so erfolgen, dass jeweils größere Mengen des Reduktionsmittels von dem Druckgas gefördert werden, d. h. beispielsweise in der Leitung abwechselnd Reduktionsmittel, beispielsweise Reduktionsmitteltropfen, und Druckgas gefördert werden und die endgültige homogene Mischung erst mit der Einspritzung in den Abgasstrom erfolgt.

Ferner ist das erste Rückschlagventil direkt angrenzend an dem Mischbereich, in dem das Reduktionsmittel mit dem Druckgas gemischt wird, angeordnet. Dies bedeutet, dass das zugeführte Druckgas vorzugsweise den gesamten in Strömungsrichtung hinter dem Rückschlagventil liegenden Bereich durchströmt, so dass beim Abschalten der Reduktionsmittelzufuhr dieser Bereich durch das Druckgas vollständig ausgespült werden kann und keine Reduktionsmittelreste in diesem Bereich verbleiben. Dazu ist die Druckgaszufuhr zu dem Mischbereich so ausgebildet, dass das Druckgas direkt die Ausgangsseite des Rückschlagventils an- bzw. überströmt, wobei durch Schließen des Rückschlagventils verhindert wird, dass das Druckgas in die Reduktionsmittelzufuhr eindringen kann.

Besonders bevorzugt ist das erste Rückschlagventil integraler Bestandteil einer den Mischbereich begrenzenden Mischkammer. Dabei bildet das Rückschlagventil vorzugsweise einen Teil einer Wandung der Mischkammer, in welche das Druckgas zum Vermischen mit dem Reduktionsmittel eingeleitet wird. Das Rückschlagventil ist somit in das die Mischkammer definierende Bauteil integriert, so dass es direkt an den Mischbereich angrenzen kann.

Dazu weist die Mischkammer vorzugsweise eine Eintrittöffnung für das Reduktionsmittel auf, welche von dem ersten Rückschlagventil verschlossen ist. Somit bildet das Verschlusselement des Rückschlagventils vorzugsweise gleichzeitig einen Teil der Innenwandung der Mischkammer. In die Mischkammer eingeleitetes Druckgas kann so die Ausgangsseite des Rückschlagventils überströmen, um dort befindliches Reduktionsmittel mit dem Druckgasstrom aus dem Dosierpumpenaggregat über die Einspritzdüse in den Abgasstrom ausspülen zu können.

Besonders bevorzugt sind die Zuführungen des Reduktionsmittels und des Druckgases zu dem Mischbereich konzentrisch zueinander angeordnet. Beispielsweise kann das Reduktionsmittel durch eine zentrale Zuführung zugeführt werden und das Druckgas strömt durch einen ringförmigen, die zentrale Zuführung umgebenden Kanal in die Mischkammer ein. Durch eine solche Anordnung kann neben einer gleichmäßigen Mischung erreicht werden, dass die Mischkammer vollständig von Reduktionsmittel frei geblasen werden kann, wenn das Druckgas konzentrisch um das Rückschlagventil herum in die Mischkammer geleitet wird. Vorzugsweise strömt das Druckgas über die gesamte Innenwandung der Mischkammer, so dass dort anhaftende Reduktionsmittelreste ausgespült werden können.

Die Eintrittsöffnung für das Reduktionsmittel ist weiter bevorzugt zentral in einer Stirnseite der Mischkammer ausgebildet. Beispielsweise kann die Mischkammer zylindrisch ausgebildet sein und die Eintrittsöffnung für das Reduktionsmittel von einer Stirnseite gebildet bzw. in einer Stirnseite der Mischkammer angeordnet sein. Die zylindrische Ausgestaltung der Mischkammer ist bei konzentrischer Zufuhr von Druckgas und Reduktionsmittel besonders vorteilhaft, da das Druckgas an den Innenwandungen der Mischkammer entlang geleitet werden kann.

Die Mischkammer weist vorzugsweise eine Umfangswandung, insbesondere eine zylindrische Umfangswandung auf, in welcher Eintrittsöffnungen für das Druckgas ausgebildet sind. Dabei sind die Eintrittsöffnungen zweckmäßigerweise über den gesamten Umfang, vorzugsweise gleichmäßig verteilt angeordnet, so dass eine gleichmäßige Zuführung des Druckgases in alle Bereiche der Mischkammer gewährleistet ist. Dadurch wird sichergestellt, dass durch einströmendes Druckgas beim Abschalten der Reduktionsmittelzufuhr die gesamte Mischkammer von Reduktionsmittelresten befreit wird.

Das Rückschlagventil kann beispielsweise so ausgebildet sein, dass eine Stirnseite der, vorzugsweise zylindrischen, Mischkammer trichterförmig ausgebildet ist, wobei in dem Trichter ein plattenförmiges Verschlusselement des ersten Rückschlagventils angeordnet ist. Durch diesen Aufbau wird ein ringförmiges Einströmen des Reduktionsmittels in die Mischkammer entlang den Wandungen der Mischkammer erreicht, so dass eine gleichmäßige Vermischung mit dem zugeführten Druckgas sichergestellt werden kann. Ferner bildet das Verschlusselement mit der umgebenden Wandung im geschlossen Zustand eine weitgehende glatte Innenwandung, welche von dem einströmenden Druckgas gleichmäßig überströmt werden kann, um Reduktionsmittelreste wegzuspülen.

Das erste Rückschlagventil in der Reduktionsmittelzuführung weist vorzugsweise ein Federelement auf, welches das Rückschlagventil in einer geschlossenen Stellung hält, wobei das Rückschlagventil durch den Fluiddruck des Reduktionsmittels gegen die Kraft des Federelementes in eine geöffnete Stellung bewegbar ist. Durch die Federvorspannung des ersten Rückschlagventils wird sichergestellt, dass immer dann, wenn von der Dosierpumpe kein Reduktionsmittel zu der Mischkammer gepumpt wird, das Rückschlagventil geschlossen gehalten wird, um ein Eindringen von Druckgas in die Reduktionsmittelleitung bzw. Reduktionsmittelzuführung zu verhindern. Das Schließen des Rückschlagventils wird somit nicht oder zumindest nicht allein durch den Druck des Druckgases bewirkt sondern durch das Federelement, welches das Rückschlagventil in seine geschlossene Position vorspannt. Ferner kann durch diese Anordnung bewirkt werden, dass das Rückschlagventil erst bei einem vorbestimmten Fluiddruck in der Reduktionsmittelzuführung öffnet, wodurch eine definierte Reduktionsmittelzufuhr zu der Mischkammer sichergestellt werden kann. Im Sinne eines Federelementes kann die Vorspannung auch durch andere geeignete elastische Elemente erreicht werden.

Gemäß einer weiteren bevorzugten Ausführungsform weist die Vormischeinrichtung in einer Zuführung für das Druckgas ein zweites Rückschlagventil auf. Dieses Rückschlagventil verhindert, dass beim Abschalten der Druckgaszufuhr oder bei einer Verringerung des Druckes in der Druckgaszuführung Reduktionsmittel in die Druckgaszuführung gelangt. Vorzugsweise ist auch dieses zweite Rückschlagventil direkt an einer Mischkammer bzw. dem Mischbereich, in welchem die Mischung von Reduktionsmittel und Druckgas erfolgt, angeordnet. Dabei kann auch das zweite Rückschlagventil integraler Bestandteil der Vormischeinrichtung oder der den Mischbereich begrenzenden Mischkammer sein. Ferner ist auch das zweite Rückschlagventil so vorgespannt, dass es in seiner Ruhelage geschlossen gehalten wird. Dies kann durch Federelemente oder andere elastische Elemente erfolgen.

Vorzugsweise wird das zweite Rückschlagventil durch ein elastisches Dichtelement gebildet, welches an einer Wandung der Zuführung für das Druckgas dichtend zur Anlage bringbar ist. In der geschlossenen Stellung liegt das elastische Dichtelement an der Wandung an, so dass kein Reduktionsmittel oder Reduktionsmittel/Druckgas-Gemisch in die Druckgaszuführung zurückfließen kann. Im geöffneten Zustand hebt das Dichtelement von der Wandung ab und gibt den Strömungsdurchgang für das Druckgas frei.

Dabei wird das Dichtelement bevorzugt durch Vorspannung dichtend an der Wandung der Zuführung gehalten und ist durch den Strömungsrichtung zu dem Mischbereich hin wirkenden Druck des Druckgases gegen die Vorspannung in eine geöffnete von der Wandung beabstandete Position bewegbar. Durch diese Anordnung wird sichergestellt, dass das Dichtelement des zweiten Rückschlagventils im Ruhezustand immer im geschlossen Zustand ist, so dass kein Reduktionsmittel in die Druckgasleitung eindringen kann. Erst wenn der Druck des Druckgases eine Wert erreicht, welcher die Vorspannkraft des Dichtelementes übersteigt, öffnet das Dichtelement und das Druckgas kann in den Mischbereich der Mischkammer einströmen, wobei dann durch die Gasströmung selber sichergestellt wird, das kein Reduktionsmittel zurück in die Druckgasleitung fließen kann.

Weiter bevorzugt ist die Wandung der Druckgaszuführung eine, vorzugsweise zylindrische, Außenwandung eines den Mischbereich und das erste Rückschlagventil enthaltenen Bauteils. Dieses Bauteil bildet die Mischkammer. Das Dichtelement des zweiten Rückschlagventils kann dabei ein ringförmiges Bauteil sein, welches mit der Außenwandung, beispielsweise auch einem Absatz oder einem definierten Anlagebereich der Außenwandung zur Anlage kommt. Bei geöffneten zweiten Rückschlagventil strömt das Druckgas dann über die Außenwandung des Bauteils bzw. der Mischkammer, so dass das Druckgas in einem ringförmigen Strom der Mischkammer zugeführt werden kann. Auf diese Weise kann die oben beschriebene konzentrische Zuführung von Druckgas und Reduktionsmittel zu der Mischkammer bewirkt werden.

Das Dichtelement des zweiten Rückschlagventils ist weiter bevorzugt als ringförmige Manschette ausgebildet, welche sich in Strömungsrichtung des Druckgases geneigt zu der Wandung hin erstreckt. Dabei ist die Manschette aus einem elastischen Material ausgebildet und vorzugsweise so gestaltet, dass die Vorspannung des elastischen Materials die Manschette in Anlage an der Wandung hält. In Strömungsrichtung kann das Druckgas bei ausreichend hohem Druck die Manschette von der Wandung abheben, wobei sie sich geringfügig aufweitet, und entlang der Wandung zu dem Mischbereich strömen. In umgekehrter Richtung bewirkt jedoch die geneigte Geometrie der Manschette, dass die Manschette durch den Druck gegen die Wandung gedrückt wird und somit das Rückschlagventil geschlossen wird, damit kein Reduktionsmittel oder Druckgas/Reduktionsmittel-Gemisch in die Druckgasleitung zurückströmen kann.

Nachfolgend wird die Erfindung beispielhaft anhand der beigefügten Figuren beschrieben. In diesen zeigt:
- Fig. 1: einen Schaltplan der hydraulischen Komponenten eines erfindungsgemäßen Dosierpumpenaggregates,
- Fig. 2: in einem geschnittenen Ausschnitt die Vormischeinrichtung eines Dosierpumpenaggregates gemäß Fig. 1,
- Fig. 3: in separater Schnittansicht die Vormischeinrichtung gemäß Fig. 2 mit geschlossenen Rückschlagventilen,
- Fig. 4: die Vormischeinrichtung gemäß Fig. 3 mit geöffneten Rückschlagventil für die Druckgaszufuhr und
- Fig. 5: die Vormischeinrichtung gemäß Figuren 3 und 4 mit geöffneten Rückschlagventil für die Reduktionsmittelzufuhr und geöffneten Rückschlagventil für die Druckgaszufuhr.

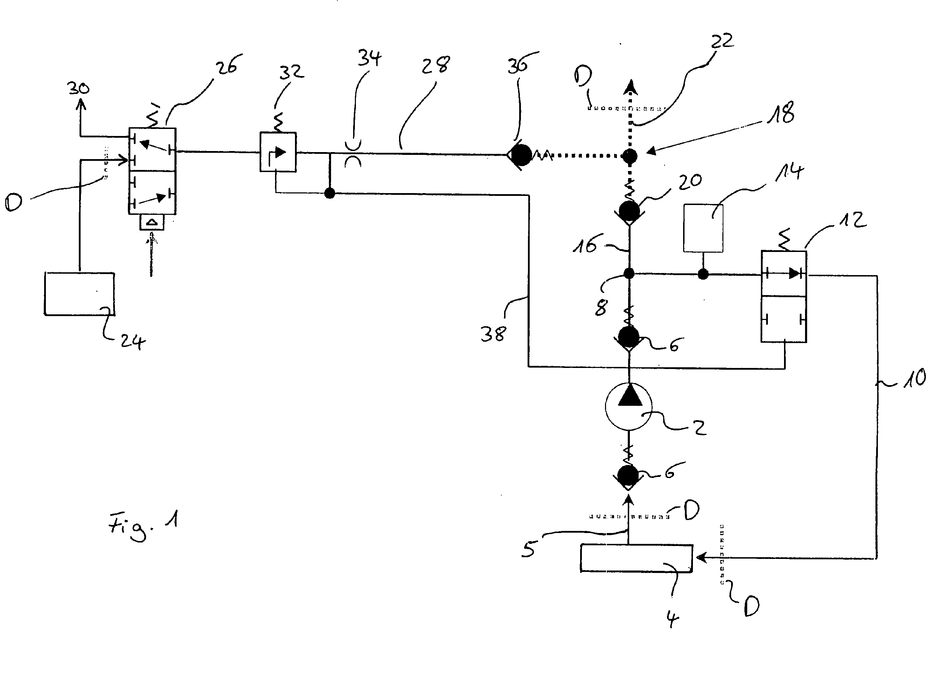

Zunächst wird die grundlegende Funktion eines Ausführungsbeispieles eines erfindungsgemäßen Dosierpumpenaggregates anhand des Schaltplans in Fig. 1 beschrieben.

Kernstück des Dosierpumpenaggregates ist eine Dosierpumpe 2, welche als Membranpumpe ausgebildet ist, mit einem zugehörigen Antrieb. Durch Steuerung des Antriebs und insbesondere Steuerung der Anzahl von Pumpenhüben kann die Menge des von der Dosierpumpe 2 geförderten Reduktionsmittels eingestellt werden, um die Reduktionsmittelmenge exakt an den Bedarf aufgrund des aktuell ablaufenden Verbrennungsprozesses im Motor anpassen zu können. Als Reduktionsmittel wird vorzugsweise eine wässrige Harnstofflösung verwendet. Das Reduktionsmittel wird in einem Reduktionsmitteltank 4 vorgehalten, aus dem es über eine Saugleitung 5 durch die Dosierpumpe 2 angesaugt wird. Im gezeigten Beispiel ist vor und hinter der Dosierpumpe 2 in bekannter Weise jeweils ein Rückschlagventil 6 angeordnet, welche wesentlicher Bestandteil der Membranpumpe sind. So stellt das in Strömungsrichtung vor der Pumpe gelegene Rückschlagventil 6 sicher, dass beim Pumphub das Reduktionsmittel nicht zurück in den Reduktionsmitteltank 4 gefördert wird. Das in Strömungsrichtung hinter der Dosierpumpe 2 liegende Rückschlagventil 6 stellt umgekehrt sicher, dass beim Ansaugen nur Reduktionsmittel aus dem Reduktionsmitteltank 4 angesaugt wird und nicht aus der Druckleitung zurückgesaugt wird.

Hinter der Dosierpumpe 2 und dem zweiten Rückschlagventil 6 zweigt an einem Verzweigungspunkt 8 eine Rücklaufleitung 10 ab, welche zurück zu dem Reduktionsmitteltank 4 führt und zur Entlüftung des Systems bei Inbetriebnahme der Dosierpumpe 2 dient.

In der Rücklaufleitung 10 ist ein Unterbrechungs- bzw. Absperrventil 12 angeordnet, durch welches die Rücklaufleitung 10 verschlossen werden kann, so dass durch die Rücklaufleitung 10 kein Reduktionsmittel zu dem Reduktionsmitteltank 4 zurückfließen kann. Im gezeigten Ruhezustand befindet sich das Absperrventil 12 in der geöffneten Stellung, in welcher die Rücklaufleitung 10 freigegeben ist. In der Rücklaufleitung 10 ist in Strömungsrichtung vor dem Absperrventil 12 und hinter dem Verzweigungspunkt 8 ein Drucksensor 14 angeordnet, welcher den Fluiddruck vor dem Absperrventil 12 und somit in der Druckleitung 16 hinter der Dosierpumpe 2 erfasst.

Die Druckleitung 16 führt von der Dosierpumpe 2 über den Verzweigungspunkt 8 zu dem Mischbereich bzw. der Mischkammer 18 einer Vorrichtungseinrichtung, in welcher das Reduktionsmittel mit Druckgas, in diesem Fall Druckluft, beaufschlagt bzw. gemischt wird. Direkt vor dem Mischbereich 18 ist in der Druckleitung 16, d. h. am Ende der Druckleitung 16 ein Rückschlagventil 20 angeordnet, welches durch Vorspannung, beispielsweise einer Feder, in der gezeigten Ruhelage in einer geschlossenen Position gehalten wird und ein Zurückströmen von Reduktionsmittel und insbesondere von Druckgas aus dem Mischbereich 18 in die Druckleitung 16 verhindert. In Strömungsrichtung hinter dem Mischbereich 18 schließt sich eine Leitung 22 an, welche zu der Einspritzdüse im Abgassystem des Kraftfahrzeuges führt.

Die in diesem gezeigten Beispiel als Druckgas verwendete Druckluft wird von einer Druckluftversorgung 24 des Kraftfahrzeuges bereitgestellt. Derartige Druckluftversorgungssysteme sind in LkW üblicherweise insbesondere zur Betätigung der Bremsen vorhanden. Mit dieser zentralen Druckluftversorgung 24 ist das gezeigte Dosierpumpenaggregat verbunden, wobei das Dosierpumpenaggregat eingangsseitig ein Solenoid bzw. Magnetventil 26 aufweist, welches die Druckluftleitung 28, die zu dem Mischbereich 18 führt, wahlweise mit der Druckluftversorgung 24 verbindet oder zur Atmosphäre 30 öffnet. Das elektrisch betätigte Magnetventil 26 ist so vorgespannt, dass es in seiner Ruhelage in der gezeigten Stellung gehalten wird, in der die Druckluftleitung 28 zur Atmosphäre 30 geöffnet ist.

In der Druckluftleitung 28 sind in Strömungsrichtung hinter dem Magnetventil 26 ein Druckregler 32 und hinter diesem eine Drossel 34 angeordnet.

An der Mischkammer bzw. dem Mischbereich 18 endet die Druckluftleitung in einem Rückschlagventil 36, welches so vorgespannt ist, dass es in der gezeigten Ruhelage geschlossen ist und durch den in der Druckluftleitung 28 wirkenden Druck gegen seine Vorspannung geöffnet werden kann. So ist sichergestellt, dass immer dann, wenn keine Druckluft aus der Druckluftleitung 28 in die Mischkammer 18 strömt, das Rückschlagventil 36 geschlossen ist, so dass kein Reduktionsmittel aus dem Mischbereich 18 in die Druckluftleitung 28 eindringen kann.

Das Absperrventil 12 in der Rücklaufleitung 10 ist druckluftbetätigt und über eine Betätigungsleitung 38 mit der Druckluftleitung 28 verbunden, wobei die Betätigungsleitung 38 zwischen dem Druckregler 32 und der Drossel 34 mit der Druckluftleitung 28 in Verbindung steht. Die Betätigungsleitung 38 sorgt dafür, dass dann, wenn das Magnetventil 26 umgeschaltet wird, so dass die Druckluftleitung 28 mit der Druckluftversorgung 24 in Verbindung steht, auch die Betätigungsleitung 38 unter Druck gesetzt wird. Der in der Betätigungsleitung 38 anstehende Luftdruck bewirkt dann ein Umschalten des Absperrventils 12 gegen dessen Vorspannung, so dass die Rücklaufleitung 10 verschlossen wird.

Die vorangehend beschriebenen Elemente, welche innerhalb der in Fig. 1 durch gestrichelte Linien D angedeuteten Grenze liegen, d. h. insbesondere die Dosierpumpe 2, das Absperrventil 12, das Magnetventil 26, der Mischpunkt 18, die Rückschlagventile und die diese Bauteile verbindenden Leitungen, sind sämtlich in das Dosierpumpenaggregat integriert, so dass das Dosierpumpenaggregat neben elektrischen Anschlüssen nach außen hin lediglich vier Fluidanschlüsse aufweist, nämlich zur Verbindung mit der Druckluftversorgung 24, zum Anschluss der zu der Einspritzdüse führenden Leitung 22, zum Anschluss der zu dem Reduktionsmitteltank 4 führenden Saugleitung 5 und zur Verbindung der Rücklaufleitung 10 mit dem Reduktionsmitteltank 4.

Bei inbetriebnahme des Systems verbleibt das Magnetventil 26 zunächst in seiner geschlossenen Ruhelage (gezeigte Position), in welcher die Druckluftleitung 28 von der Druckluftversorgung 24 getrennt ist. Als erstes wird die Dosierpumpe 2 in Betrieb genommen, welche über die Saugleitung 5 Reduktionsmittel aus dem Reduktionsmitteltank 4 ansaugt. Die Vorspannung des Rückschlagventils 20 in der gezeigten geschlossenen Stellung ist so gewählt, dass bei geöffneter Rücklaufleitung 10 der Druck in der Druckleitung 16 nicht ausreicht, dass Rückschlagventil gegen die Vorspannung zu öffnen.

Da zunächst in der Druckluftleitung 28 kein Druck anliegt, ist auch die Betätigungsleitung 38 zunächst drucklos, so dass das Absperrventil 12 in seiner geöffneten Ruhestellung verbleibt und die Rücklaufleitung 10 geöffnet ist. Auf diese Weise fördert die Dosierpumpe 2 zunächst Reduktionsmittel aus dem Reduktionsmitteltank 4 und über den Verzweigungspunkt 8 durch die Rücklaufleitung 10 zurück in den Reduktionsmitteltank 4. Dies dient dazu, das System bei Inbetriebnahme zu entlüftend, d. h. zunächst sicherzustellen, dass die Druckleitung 15 vollständig mit Reduktionsmittel gefüllt ist.

Wenn die Druckleitung 16 und die Rücklaufleitung 10 vollständig mit Reduktionsmittel gefüllt sind, erreicht der Fluiddruck in der Druckleitung 16 und in der Rücklaufleitung 10 vor dem Absperrventil 12 einen bestimmten Grenzwert, welcher von dem Drucksensor 14 erfasst wird. Wenn dieser Grenzwert von dem Drucksensor 14 erfasst wird, schaltet eine Steuerung das Magnetventil 26 um, so das über die Druckluftversorgung 24 des Lkw die Druckluftleitung 28 mit Druckluft versorgt wird. Dadurch wird auch die Betätigungsleitung 38 mit Druck beaufschlagt, wodurch das Absperrventil 12 gegen die Federvorspannung umgeschaltet wird und auf diese Weise die Rücklaufleitung 10 geschlossen wird. Da nun die Druckleitung 16 nicht mehr über die Rücklaufleitung 10 zu dem Reduktionsmitteltank 4 hin geöffnet ist, steigt der Fluiddruck bei weiterem Betrieb der Dosierpumpe 2 in der Druckleitung 16 so weit an, dass der Druck ausreicht, das Rückschlagventil 20 gegen seine Federvorspannung zu öffnen, so dass das Reduktionsmittel in den Mischbereich 18 strömen kann und dort mit der Druckluft aus der Druckluftleitung 28 beaufschlagt wird. Druckluft und Reduktionsmittel strömen dann gemeinsam durch die Leitung 22 zu einer Einspritzdüse in der Abgasleitung des Lkw.

Über die Anzahl der Pumpenhübe der Dosierpumpe kann im Betrieb die Menge des zugeführten Reduktionsmittels eingestellt werden. Der Druckluftstrom durch die Druckluftleitung 28 in den Mischbereich 18 ist dabei konstant.

Wenn die Anlage außer Betrieb genommen wird, insbesondere beim Abstellen des Fahrzeuges, wird zunächst die Dosierpumpe 2 abgeschaltet, so dass kein Reduktionsmittel mehr aus dem Reduktionsmitteltank 4 gefördert wird. Dadurch sinkt der Druck in der Druckleitung 16 so weit ab, dass das Rückschlagventil 20 aufgrund seiner Vorspannung schließt und verhindert, dass weiteres Reduktionsmittel in den Mischbereich 18 eindringt. Da das Magnetventil 26 zunächst weiter geöffnet ist, strömt weiter Druckluft durch das Rückschlagventil 36 in den Mischbereich 18 ein und spült dort noch vorhandene Reduktionsmittelreste über die Leitung 22 aus.

Wenn dann das Magnetventil 26 durch Abschalten der Stromversorgung geschlossen wird, ist auch der Druckluftstrom durch die Druckluftleitung 28 und das Rückschlagventil 36 abgeschaltet, so dass das Gesamtsystem außer Betrieb genommen ist. In diesem Zustand schaltet auch das Absperrventil 12 wieder in seine Ruhelage zurück, d. h. die Rücklaufleitung 10 ist geöffnet.

Durch die Anordnung des Rückschlagventils 20 ist sichergestellt, dass keine Luft von der Mischkammer bzw. dem Mischbereich 18 in die Druckleitung 16 eindringen kann. So kann eine Kristallisation des Reduktionsmittels in der Druckleitung 16 verhindert werden. Da ferner nach dem Abschalten der Dosierpumpe 2 durch den konstanten Druckluftstrom im Mischbereich 18 dieser automatisch ausgespült wird, kann auch eine Kristallisation von Reduktionsmittel im Mischbereich 18 und in der sich abschließenden Leitung 22 verhindert werden.

Der Drucksensor 14, welcher bevorzugt ein elektrisches Signal ausgibt, dient neben der Erfassung der vollständigen Entlüftung der Druckleitung 16 auch dazu, weitere unerwünschte Betriebszustände zu erkennen. So kann durch den Drucksensor 14 eine verstopfte Rücklaufleitung 10 erkannt werden, nämlich wenn der Druck bei geöffnetem Absperrventil 12 einen vorbestimmten Grenzwert übersteigt, welcher bei geöffneter Rücklaufleitung 10 normalerweise nicht auftreten kann. Ferner kann der Drucksensor 14 auch erfassen, dass die Einspritzdüse in der Abgasleitung des Fahrzeuges verstopft ist. Dann steigt nämlich der Druck in der Druckleitung 16 bei geöffnetem Magnetventil 26 ebenfalls über einen vorbestimmten Grenzwert an, welcher bei korrekt arbeitender Einspritzdüse normalerweise nicht auftreten kann. Darüber hinaus kann über den Drucksensor 14 auch erfasst werden, dass der Reduktionsmitteltank 4 leer ist. Dann nämlich sinkt im Betrieb der Druck in der Druckleitung 16 unter einen vorbestimmten Grenzwert ab, welcher im normalen Betrieb bei geschlossener Rücklaufleitung 10 normalerweise nicht auftreten kann.

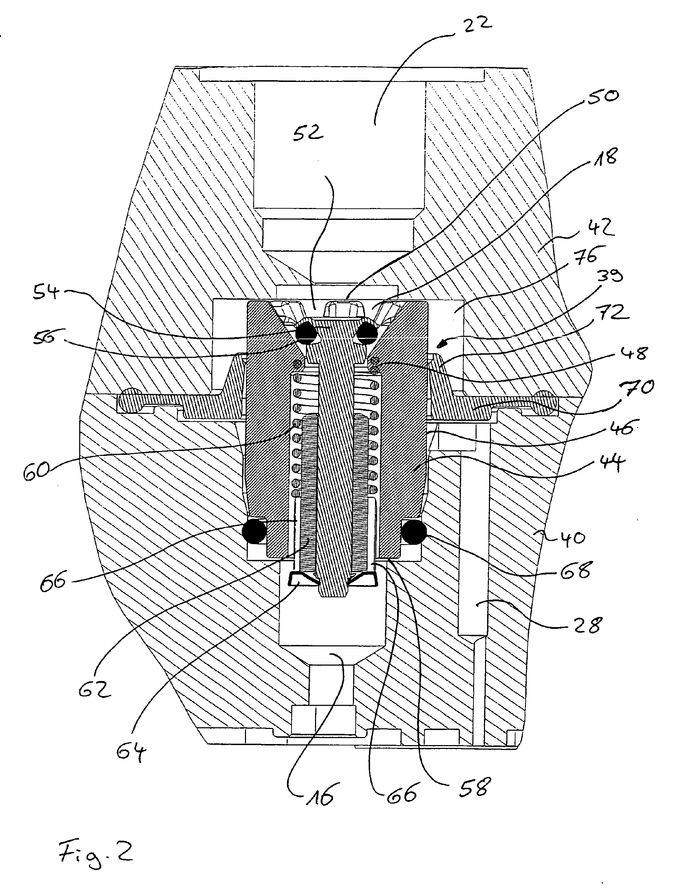

Anhand der Figuren 2 bis 5 wird nachfolgend ein beispielhafter Aufbau der Vormischeinrichtung im Wesentlichen bestehend aus dem Mischbereich 18 und den Rückschlagventilen 20 und 36 beschrieben.

Fig. 2 zeigt eine Schnittansicht der Vormischeinrichtung 39 in einem in einen Pumpenkopf eingebauten Zustand. Der Pumpenkopf wird im Wesentlichen von einer Zentralplatte 40 und einer an dieser anliegenden Stirnplatte 42 gebildet, wobei zwischen den Platten 40 und 42 Strömungskanäle ausgebildet sind und die Vormischeinrichtung 39 angeordnet ist.

In der Stirnplatte 42 ist die Leitung 22 als Anschluss ausgebildet, an welchen eine Fluidleitung angebunden werden kann, welche zu der Einspritzdüse im Abgassystem des Fahrzeuges führt. In der Zentralplatte 40 sind die Druckleitung 16 sowie die Druckluftleitung 28 in Form von Kanälen in der Oberfläche und sich daran anschließenden Durchgangslöchern ausgebildet.

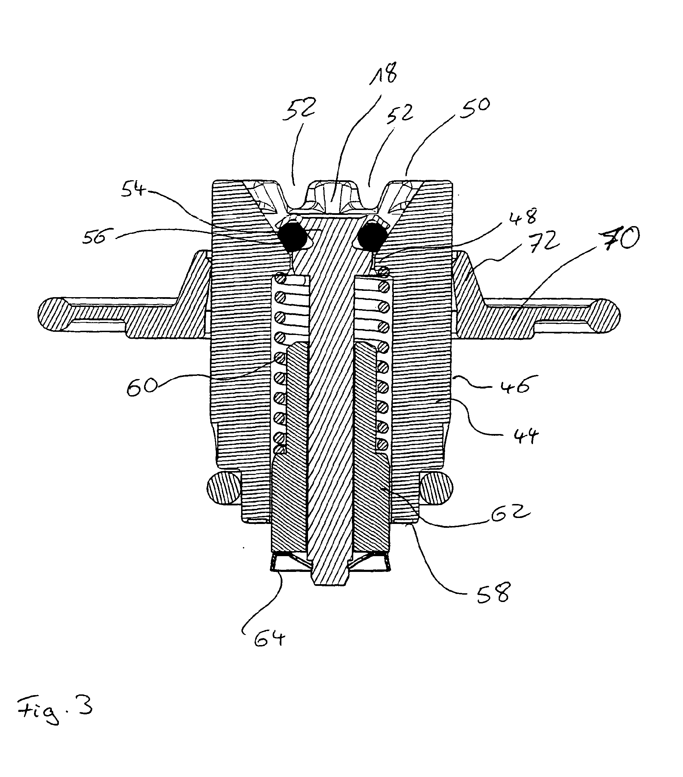

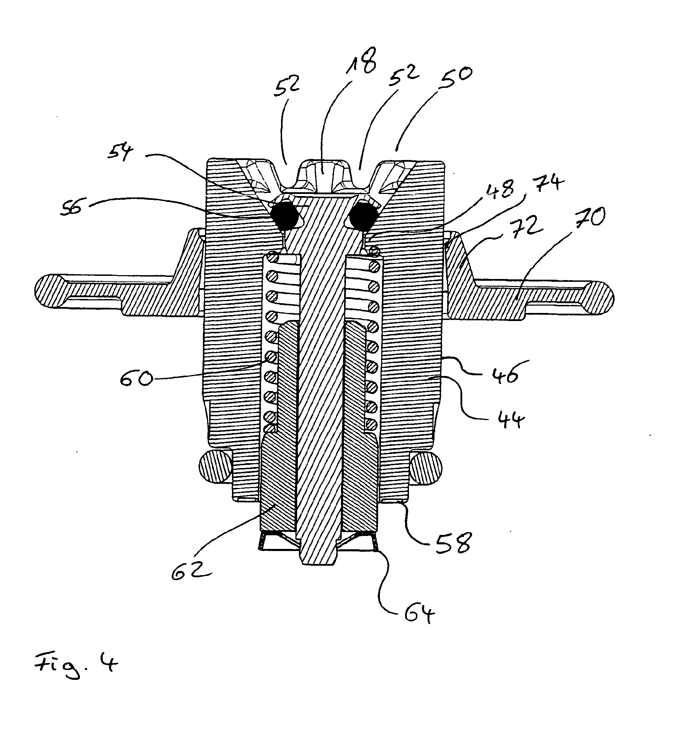

Die Vormischeinrichtung weist als zentrales Bauteil eine zylindrische Hülse 44 mit zylindrischer Außenwandung 46 auf. Im Inneren der Hülse 44 ist eine Einschnürung 48 ausgebildet, welche den Innenraum der Hülse 46 in zwei Teile teilt. Der erste Teil des Innenraums erweitert sich ausgehend von der Einschnürung 48 zu einer ersten Stirnseite 50 der Hülse 44 hin trichterförmig. Dieser Bereich ist der eigentliche Mischbereich 18 bzw. die Mischkammer 18 der Vormischeinrichtung 39. In der Umfangswandung des Mischbereiches 18 sind gleichmäßig über den Umfang verteilt Ausnehmungen bzw. Durchbrechungen 52 ausgebildet, welche als Eintrittsöffnungen für die Druckluft dienen. Die von der Einschnürung 48 umgebende Öffnung im Inneren der Hülse 44 dient als Eintrittsöffnung für das Reduktionsmittel in den Mischbereich 18. Dieser Bereich ist durch einen Kolben 54 mit einem in eine Umfangsnut eingelegten O-Ring 56 verschlossen. Dabei kann der O-Ring 56, wie in den Figuren 3 und 4 gezeigt, dichtend an der trichterförmigen Innenwandung des Mischbereiches 18 im Inneren der Hülse 44 zur Anlage kommen.

Der Kolben 54 erstreckt sich mit einer Kolbenstange 55 durch die Einschnürung 48 hindurch in den zweiten Bereich im Inneren der Hülse 44 zu der zweiten Stirnseite 58, welche der ersten Stirnseite 50 abgewandt ist. In dem zweiten Teil des Innenraums der Hülse 44 ist eine Druckfeder angeordnet, welche sich mit einem ersten Ende an der Einschnürung 48 abstützt. Das entgegengesetzte Ende der Druckfeder 60, welche als Schraubfeder ausgebildet ist, liegt an einer die Kolbenstange 55 umgebenden Führungshülse 62 an einem der Einschnürung 48 zugewandten Absatz an. Die Führungshülse 62 führt die Kolbenstange und damit den Kolben 54 im Inneren der Hülse 44, in dem sie an der Innenwandung der Hülse 44 anliegt. Die Führungshülse 62 stützt sich über einen Federring 64 an den dem Kolben 54 abgewandten Längsende der Kolbenstange 55 ab. So drückt die Druckfeder 60 die Kolbenstange 55 in die Richtung zu der zweiten Stirnseite 58 der Hülse 40, so dass der Kolben 54 mit dem O-Ring 56 gegen die trichterförmige bzw. konische Innenwandung des Mischbereiches 18 gedrückt wird. Auf diese Weise wird der Kolben 54, welcher das Rückschlagventil 20 in Fig. 1 bildet, in seiner Ruhelage im geschlossenen Zustand gehalten, wie in den Figuren 3 und 4 gezeigt ist.

Die Führungshülse weist an ihrem Außenumfang Längsnuten 66 auf (in den Figuren 3 bis 5 nicht gezeigt), durch welche das Reduktionsmittel durch die Druckleitung 16 in das Innere der Hülse 44 zu der Einschürung 48 strömen kann. Durch den die Hülse 44 außen umgebende O-Ring 58 wird dabei verhindert, dass das Reduktionsmittel außen an der Hülse 44 vorbeiströmen kann. Im eingesetzten Zustand dichtet der O-Ring 68 die Außenwandung der Hülse 44 gegen die Innenwandung einer Ausnehmung, in welcher die Hülse 44 in der Zentralplatte 40 angeordnet ist, ab.

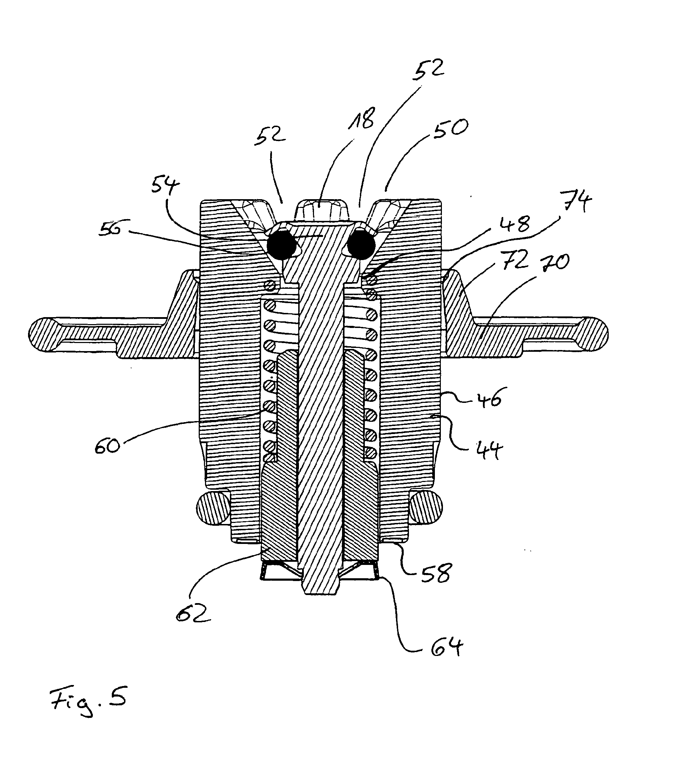

Der Fluiddruck in der Druckleitung 16 wirkt im Inneren der Hülse 44 auf den Kolben 54 in Richtung der Längsachse der Kolbenstange 55. Bei ausreichend hohem Fluiddruck in der Druckleitung 16 übersteigt die durch den Druck auf den Kolben 54 wirkende Kraft die Federkraft der Druckfeder 60, so dass der Kolben 54 mit der Kolbenstange 55 in Richtung der ersten Stirnseite 50 der Hülse 44 verschoben wird und der Kolben 54 mit dem O-Ring 56 von der konischen innenwandung des Mischbereiches 18 abhebt, wie in den Figuren 2 und 5 gezeigt. So entsteht ein ringförmiger Spalt zwischen dem Kolben 54 bzw. dem O-Ring 56 und der umgebenden Innenwandung der Hülse 44 bzw. des Mischbereiches 18, durch welchen das Reduktionsmittel in den Mischbereich 18 einströmen kann.

Das zweite Rückschlagventil 36 der Vormischeinrichtung 39 wird durch eine ringförmige elastische Manschette 70 gebildet, welche zwischen der Zentralplatte 40 und der Stirnplatte 42 eingeklemmt ist. Dabei kommt insbesondere ein verdickter Bereich am Außenumfang der Manschette 70 sowohl an der Zentralplatte 40 als auch der Stirnplatte 42 zu Anlage, so dass die Druckluft aus der Druckluftleitung 28 nicht am Außenumfang der Manschette 70 vorbei strömen kann.

An ihrem Innenumfang ist die Manschette 70 zur Stirnseite 50 der Hülse 44 hin in axialer Richtung hülsenförmig verlängert, so dass ein Kragen 72 gebildet wird. Dieser Kragen 72 erstreckt sich leicht konisch geneigt zur Außenwandung 46 der Hülse 44 und kommt mit seinem freien Stirnende an dieser zur Anlage. Dabei ist die Manschette 70 bzw. der Kragen 72 derart elastisch ausgebildet, dass die Manschette in ihrer Ruhelage dichtend an der Außenwandung 46 der Hülse 44 gehalten wird, wie in den Figuren 2 und 3 gezeigt ist.

Wenn Druckluft in die Druckluftleitung 28 eingeleitet wird, umströmt die Druckluft in der Zentralplatte 40 zunächst am Außenumfang 46 die gesamte Hülse 44, da die die Hülse 44 aufnehmende Ausnehmung in der Zentralplatte 40 in dem der Druckleitung 16 abgewandten Bereich größer als der Außendurchmesser der Hülse 44 ausgebildet ist. Die Druckluft strömt dann in den Bereich zwischen dem Kragen 72 der Manschette 70 und der Außenwandung 46 der Hülse 44 ein, wobei durch den Luftdruck der Kragen 72 von der Außenwandung der Hülse 46 weggedrückt wird, so dass ein ringförmiger Spalt 74 zwischen der Außenwandung 46 und dem Innenumfang der Manschette 70 bzw. des Kragens 72 entsteht, durch welchen die Druckluft in die Ausnehmung 76 strömen kann, in welcher die Hülse 44 in der Stirnplatte 42 angeordnet ist. Von der Ausnehmung 46 strömt die Druckluft dann durch die Ausnehmungen bzw. Durchbrechungen 52 in den Mischbereich 18 und von dort gemeinsam mit dem zugeführten Reduktionsmittel durch die Leitung bzw. den Anschluss 22 weiter zu der Einspritzdüse im Abgassystem des Fahrzeuges.

Wenn die Druckluftzufuhr in der Druckluftleitung 28 abgeschaltet wird, legt sich die Manschette 70 mit ihrem Kragen 72 aufgrund ihrer Elastizität wieder dichtend an die Außenwandung 46 der Hülse 44 an. Aufgrund des in die Ausnehmung 76 ragenden Kragen 72 der Manschette 70 wird ferner erreicht, dass ein höherer Druck in der Ausnehmung 76 die hülsenförmige Verlängerung bzw. den Kragen 72 der Manschette 70 noch stärker gegen die Außenwandung 46 drückt und somit das Rückschlagventil 36 sicher verschließt.

Die Ausnehmungen bzw. Durchbrechungen 52 sind so ausgebildet, dass sie sich in Längsrichtung der Hülse 44 bis zur Außenseite des Kolbens 54 erstrecken. Ferner sind die Ausnehmungen 52 so geformt, dass sie sich zu dem Inneren der Hülse 44, d. h. zum Mischbereich 18 hin erweitern. Dadurch wird erreicht, dass die Druckluft, welche durch die Ausnehmungen 52 in den Mischbereich 18 einströmt, den gesamten Mischbereich 18 an seiner Innenwandung und insbesondere auch die Außenseite des Kolbens 54 vollständig überströmt, so dass Reduktionsmittelreste aus dem Mischbereich 18 vollständig ausgespült werden können.

### Bezugszeichenliste

- 2 -: Dosierpumpe
- 4 -: Reduktionsmitteltank
- 5 -: Saugleitung
- 6 -: Rückschlagventil
- 8 -: Verzweigungspunkt
- 10 -: Rücklaufleitung
- 12 -: Absperrventil
- 14 -: Drucksensor
- 16 -: Druckleitung
- 18 -: Mischbereich
- 20 -: Rückschlagventil
- 22 -: Leitung
- 24 -: Druckluftversorgung
- 26 -: Magnetventil
- 28 -: Druckluftleitung
- 30 -: Atmosphäre
- 32 -: Druckregler
- 34 -: Drossel
- 36 -: Rückschlagventil
- 38 -: Betätigungsleitung
- 39 -: Vormischeinrichtung
- 40 -: Zentralplatte
- 42 -: Stirnplatte
- 44 -: Hülse
- 46 -: Außenwandung
- 48 -: Einschnürung
- 50 -: Stirnseite
- 52 -: Ausnehmungen
- 54 -: Kolben
- 55 -: Kolbenstange
- 56 -: O-Ring
- 58 -: Stirnseite
- 60 -: Druckfeder
- 62 -: Führungshülse
- 64 -: Federring
- 66 -: Längsnuten
- 68 -: O-Ring
- 70 -: Manschette
- 72 -: Kragen
- 74 -: Spalt
- 76 -: Ausnehmung
- D -: Grenze des Dosierpumpenaggregats

## Patentansprüche

1. Dosierpumpenaggregat zum Zumischen eines flüssigen Reduktionsmittels in einen Abgasstrom, welches eine Vormischeinrichtung (39) aufweist, in welcher in einem Mischbereich (18) das zugeführte Reduktionsmittel mit einem Druckgas gemischt wird,
**dadurch gekennzeichnet, dass**
in der Vormischeinrichtung (39) in einer Zuführung (16) für das Reduktionsmittel in Strömungsrichtung vor dem Mischbereich (18), in dem das Reduktionsmittel mit dem Druckgas gemischt wird, ein direkt an diesen Mischbereich angrenzendes erstes Rückschlagventil (20) derart angeordnet ist, dass das Druckgas direkt die Ausgangsseite dieses Rückschlagventils (20) überströmt.

2. Dosierpumpenaggregat nach Anspruch 1, **dadurch gekennzeichnet, dass** das erste Rückschlagventil (20) integraler Bestanteil einer den Mischbereich (18) begrenzenden Mischkammer ist.

3. Dosierpumpenaggregat nach einem der vorangehenden Ansprüche, **dadurch gekennzeichnet, dass** die Mischkammer eine Eintrittsöffnung (48) für das Reduktionsmittel aufweist, welche von dem ersten Rückschlagventil (20, 54) verschlossen ist.

4. Dosierpumpenaggregat nach einem der vorangehenden Ansprüche, **dadurch gekennzeichnet, dass** die Zuführungen (16, 28) des Reduktionsmittels und des Druckgases zu dem Mischbereich (18) konzentrisch zueinander angeordnet sind.

5. Dosierpumpenaggregat nach Anspruch 4, **dadurch gekennzeichnet, dass** die Eintrittsöffnung (48) für das Reduktionsmittel zentral in einer Stirnseite der Mischkammer (18) ausgebildet ist.

6. Dosierpumpenaggregat nach einem der Ansprüche 2 bis 5, **dadurch gekennzeichnet, dass** die Mischkammer (18) eine Umfangswandung aufweist, in welcher Eintrittsöffnungen (52) für das Druckgas ausgebildet sind.

7. Dosierpumpenaggregat nach einem der Ansprüche 2 bis 6, **dadurch gekennzeichnet, dass** eine Stirnseite der Mischkammer (18) trichterförmig ausgebildet ist, wobei in dem Trichter ein plattenförmiges Verschlusselement (54) des ersten Rückschlagventils (20) angeordnet ist.

8. Dosierpumpenaggregat nach einem der vorangehenden Ansprüche, **dadurch gekennzeichnet, dass** das erste Rückschlagventil (20) durch ein Federelement (60) in einer geschlossenen Stellung gehalten und durch den Fluiddruck des Reduktionsmittels gegen die Kraft des Federelementes (60) in eine geöffnete Position bewegbar ist.

9. Dosierpumpenaggregat nach einem der vorangehenden Ansprüche, **dadurch gekennzeichnet, dass** die Vormischeinrichtung (39) in einer Zuführung (28) für das Druckgas ein zweites Rückschlagventil aufweist.

10. Dosierpumpenaggregat nach Anspruch 9, **dadurch gekennzeichnet, dass** das zweite Rückschlagventil (36) durch ein elastisches Dichtelement (70, 72) gebildet ist, welches an einer Wandung (46) der Zuführung dichtend zur Anlage bringbar ist.

11. Dosierpumpenaggregat nach Anspruch 10, **dadurch gekennzeichnet, dass** das Dichtelement (70, 72) durch Vorspannung dichtend an der Wandung (46) der Zuführung gehalten wird und durch den in Strömungsrichtung zu dem Mischbereich (18) hin wirkenden Druck des Druckgases gegen die Vorspannung in eine geöffnete von der Wandung (45) beabstandete Position bewegbar ist.

12. Dosierpumpenaggregat nach Anspruch 10 oder 11, **dadurch gekennzeichnet, dass** die Wandung eine, vorzugsweise zylindrische, Außenwandung (46) eines den Mischbereich (18) und das erste Rückschlagventil (20) enthaltenden Bauteils (44) ist.

13. Dosierpumpenaggregat nach Anspruch 12, **dadurch gekennzeichnet, dass** das Dichtelement des zweiten Rückschlagventils als ringförmige Manschette (70, 72) ausgebildet ist, welche sich in Strömungsrichtung des Druckgases geneigt zu der Wandung (46) hin erstreckt.

## Claims

1. A metering pump assembly for admixing a fluid reduction agent into an exhaust gas flow, which comprises a premixing device (39), in which the supplied reduction agent is mixed with a pressurised gas in a mixing region (18),
**characterised in that** a first return valve (20) directly adjacent to the mixing region is arranged in the premixing device (39) in a supply conduit (16) for the reduction agent, in the flow direction in front of the mixing region (18) in which the reduction agent is mixed with the pressurised gas, in a manner such that the pressurised gas flows directly over the exit side of this return valve (20).

2. A metering pump assembly according to claim 1, **characterised in that** the first return valve (20) is an integral component of a mixing chamber delimiting the mixing region (18).

3. A metering pump assembly according to one of the preceding claims, **characterised in that** the mixing chamber comprises an entry opening (48) for the reduction agent, which is closed by the first return valve (20, 54).

4. A metering pump assembly according to one of the preceding claims, **characterised in that** the supply conduits (16, 28) of the reduction agent and of the pressurised gas to the mixing region (18) are arranged concentrically to one another.

5. A metering pump assembly according to claim 4, **characterised in that** the entry opening (48) for the reduction agent is formed centrally in an end-side of the mixing chamber (18).

6. A metering pump assembly according to one of the claims 2 to 5, **characterised in that** the mixing chamber (18) comprises a peripheral wall, in which entry openings (52) for the pressurised gas are formed.

7. A metering pump assembly according to one of the claims 2 to 6, **characterised in that** an end-side of the mixing chamber (18) is designed in a funnel-like manner, wherein a plate-like closure element (54) of the first return valve (20) is arranged in the funnel.

8. A metering pump assembly according to one of the preceding claims, **characterised in that** the first return valve (20) is held in a closed position by a spring element (60), and may be moved into an opened position by way of the fluid pressure of the reduction agent, against the force of the spring element (60).

9. A metering pump assembly according to one of the preceding claims, **characterised in that** the premixing device (39) comprises a second return valve in a supply conduit (28) for the pressurised gas.

10. A metering pump assembly according to claim 9, **characterised in that** the second return valve (36) is formed by an elastic sealing element (70, 72), which may be brought to sealingly bear on a wall (46) of the supply conduit.

11. A metering pump assembly according to claim 10, **characterised in that** the sealing element (70, 72) is sealingly held on the wall (46) of the supply conduit by way of biasing, and may be moved against the biasing, into an opened position distanced to the wall (45) by way of the pressure of the pressurised gas acting in the flow direction towards the mixing region (18).

12. A metering pump assembly according to claim 10 or 11, **characterised in that** the wall is a preferably cylindrical, outer wall (46) of a component (44) containing the mixing region (18) and the first return valve (20).

13. A metering pump assembly according to claim 12, **characterised in that** the sealing element of the second return valve is designed as an annular sleeve (70, 72) which extends in the flow direction of the pressurised gas inclined towards the wall (46).

## Revendications

1. Groupe moto-pompe de dosage pour amener et mélanger un agent de réduction liquide dans un flux de gaz d'échappement, qui présente un dispositif de pré-mélange (39), dans lequel l'agent de réduction amené est mélangé à un gaz sous pression, dans une zone de mélange (18),
**caractérisé en ce que**
dans le dispositif de pré-mélange (39), est placée, dans un conduit d'amenée (16) pour l'agent de réduction, en amont, dans le sens d'écoulement, de la zone de mélange (18), dans laquelle l'agent de réduction est mélangé au gaz sous pression, une première soupape anti-retour (20) directement contiguë à cette zone de mélange, ceci de telle manière que le gaz sous pression s'écoule directement par dessus le côté de sortie de cette soupape anti-retour (20).

2. Groupe moto-pompe de dosage selon la revendication 1, **caractérisé en ce que** la première soupape anti-retour (20) fait intégralement partie d'une chambre mélangeuse délimitant la zone de mélange (18).

3. Groupe moto-pompe de dosage selon l'une des revendications précédentes, **caractérisé en ce que** la chambre mélangeuse présente une ouverture d'entrée (48) pour l'agent de réduction, qui est obturée par la première soupape anti-retour (20, 54).

4. Groupe moto-pompe de dosage selon l'une des revendications précédentes, **caractérisé en ce que** les conduits d'amenée (16, 28) de l'agent de réduction et du gaz sous pression à la zone de mélange (18), sont disposés concentriquement l'un à l'autre.

5. Groupe moto-pompe de dosage selon la revendication 4, **caractérisé en ce que** l'ouverture d'entrée (48) pour l'agent de réduction est réalisée en position centrale dans une face avant de la chambre mélangeuse (18).

6. Groupe moto-pompe de dosage selon l'une des revendications 2 à 5, **caractérisé en ce que** la chambre mélangeuse (18) présente une paroi périphérique, dans laquelle des ouvertures d'entrée (52) pour le gaz sous pression sont pratiquées.

7. Groupe moto-pompe de dosage selon l'une des revendications 2 à 6, **caractérisé en ce qu'**une face avant de la chambre mélangeuse (18) est réalisée sous forme d'un entonnoir, un obturateur (54), en forme de plaque, de la première soupape anti-retour (20) étant disposé dans l'entonnoir.

8. Groupe moto-pompe de dosage selon l'une des revendications précédentes, **caractérisé en ce que** la première soupape anti-retour (20) est maintenue dans une position fermée par un élément formant ressort (60) et est déplaçable dans un état ouvert, à l'encontre de la force de l'élément formant ressort (60), par la pression fluidique de l'agent de réduction.

9. Groupe moto-pompe de dosage selon l'une des revendications précédentes, **caractérisé en ce que** le dispositif de pré-mélange (39) présente une deuxième soupape anti-retour dans un conduit d'amenée (28) pour le gaz sous pression.

10. Groupe moto-pompe de dosage selon la revendication 9, **caractérisé en ce que** la deuxième soupape anti-retour (36) est formée par un élément d'étanchéité élastique (70, 72) qui peut être mis en appui, de façon étanche, contre une paroi (46) du conduit d'amenée.

11. Groupe moto-pompe de dosage selon la revendication 10, **caractérisé en ce que** l'élément d'étanchéité (70, 72) est, par précontrainte, maintenu, de façon étanche, contre la paroi (46) du conduit d'amenée et est déplaçable, à l'encontre de la précontrainte, dans une position ouverte, espacée de la paroi (45), par la pression du gaz sous pression agissant dans la direction d'écoulement vers la zone de mélange (18).

12. Groupe moto-pompe de dosage selon la revendication 10 ou 11, **caractérisé en ce que** la paroi est une paroi extérieure (46), de préférence cylindrique, d'un élément de construction (44) contenant la zone de mélange (18) et la première soupape anti-retour (20).

13. Groupe moto-pompe de dosage selon la revendication 12, **caractérisé en ce que** l'élément d'étanchéité de la deuxième soupape anti-retour est réalisé sous forme d'une garniture (70, 72) de forme annulaire, qui s'étend inclinée vers la paroi (46), dans la direction d'écoulement du gaz sous pression.
